# EUROPEAN PATENT APPLICATION

(11) **EP 4 454 960 A1**
(43) Date of publication of application: **30.10.2024**
(21) Application number: 24171714.9
(22) Date of filing: 22.04.2024
(51) Int. Cl.: B60T 7/10, B60T 11/16, B60T 11/18, B62K 23/06, B62L 3/02, G05G 1/04

(54) **LEVER ASSEMBLY, LEVER DEVICE**

(30) Priority: 27.04.2023 IT 202300008247
(71) Applicant: Brembo S.p.A., 24035 Curno (Bergamo) (IT)
(72) Inventor: COLOMBO, Marcello, I-24035 Curno (BERGAMO) (IT); GIRLANDA, Enrico, I-24035 Curno (BERGAMO) (IT)
(74) Representative: Crippa, Paolo Ernesto

(57) **Abstract**

The present invention relates to a lever assembly 1 for a lever device 100 configured to hydraulically actuate a first braking device or front braking device 101 of a handlebar vehicle, said lever device 100 comprising a master cylinder body 21 comprising connecting means 20 for constraining the master cylinder body 21 to a handlebar of the handlebar vehicle, said master cylinder body 21 comprising cylinder walls 55 delimiting a cavity or cylinder 23, at least one float or piston 22, operatively associated with the master cylinder body 21, so as to be adapted to slide inside the cavity or cylinder 23 along a thrust direction X-X, said float or piston 22 comprising a piston bottom 56 defining, with the cylinder walls 55 of the master cylinder body 21, at least one pressure chamber 57 configured to accommodate an actuating fluid of the first braking device or front braking device 101, wherein at least one of the cylinder walls 55 is interrupted to delimit at least one supply channel 58 configured to put the pressure chamber 57 in fluid communication with at least one associable fluid tank 24, wherein the piston bottom 56 is movable with respect to said cylinder walls 55 between at least one end-of-stroke position, in which a volume of said pressure chamber 57 is maximum, and at least a first working position, in which said piston bottom fluidly isolates said pressure chamber 57 said supply channel 58 pressurizing the actuating fluid in the pressure chamber 57, wherein the lever device 100 comprises an elastic return element 5 arranged inside said cavity or cylinder and interposed between said piston bottom 56 and a connecting seat defined by the cylinder walls 55 so as to elastically bias the piston or float 22 to the end-of-stroke position, wherein the lever assembly 1 comprises
a primary lever 2 rotatably associable with the master cylinder body 21 so as to rotate about at least one pivot axis Y-Y, said primary lever 2 being either directly or indirectly connectable to said float or piston 22; the primary lever 2 being rotatable about the at least one pivot axis Y-Y between a primary lever resting position and at least one primary lever actuation position, in which the primary lever 2 either directly or indirectly biases said float or piston 22, wherein the lever assembly 1 comprises an elastic return element 4 of primary lever configured to elastically bias the primary lever 2 to the primary lever resting position, wherein the elastic return element 4 of primary lever is a torsional spring comprising at least a first elastic return element winding 32, a first arm 30 of first elastic return element, and a second arm 31 of first elastic return element extending from said a first elastic return element winding 32, wherein the primary lever 2 comprises a primary lever body 11, wherein the primary lever body 11 defines a primary lever recessed housing or seat 16 adapted to accommodate at least partially the elastic return element 4 of primary lever, wherein the primary lever body 11 comprises at least a first primary lever connecting element 17, wherein the first primary lever connecting element 17 comprises a first primary lever connecting element coupling portion 26a configured to couple the second arm 31 of first elastic return element so that, when the second arm 31 of first elastic return element is coupled to the first primary lever connecting element 17, the elastic return element 4 of primary lever is preassembled to the primary lever 2 irrespective of the connection of the primary lever 2 to the master cylinder body 21.

## Description

### . Field of the invention

. The present invention relates to a lever assembly for a lever device for a handlebar vehicle and to a lever device.

### . Background art

. Lever assemblies for handlebar vehicles are known, comprising a grippable lever or primary lever rotatably connected to a support body constrainable to a handlebar of the handlebar vehicle to actuate a brake or clutch actuating device so that the actuating device can be actuated by rotating the grippable lever.

. Under conditions of no external forces or braking actions applied to the grippable lever, the grippable lever is kept in a primary lever resting position by the elastic action of an elastic return element of primary lever. For example, the elastic return element of primary lever is a torsional spring acting between a portion of the support body constrainable to the handlebar, e.g., a bracket or an outer portion of the master cylinder body, and the primary lever by constantly and elastically opposing a rotation of the primary lever towards the handlebar.

. In some solutions of lever assemblies of known types, the elastic return element of primary lever is a torsional spring comprising a winding portion, a first connecting arm, and a second connecting arm, extending from the winding portion to apply the elastic return action.

. The torsional spring is positioned with its winding portion along a rotation axis of the primary lever, e.g., defined by a rotation pin connectable to the support body constrainable to the handlebar so that the primary lever can rotate about the rotation pin, where the first connecting arm abuts against the primary lever stop and the second connecting arm abuts against the body constrainable to the handlebar. In some solutions, such as the solution of document JP3754514B2, the winding portion is clamped axially between a bracket of the body constrainable to the handlebar and the head of the rotation pin. In other solutions, such as the solution of document EP2367716B1, the winding portion is enclosed in a housing defined between the primary lever and a secondary lever, in which the primary lever and secondary lever are rotatably constrained to the support body constrainable to the handlebar by the rotation pin.

. In a step of assembly, the elastic return element of primary lever must be positioned in its assembly position on the spot, a user running the risk of making more than one positioning attempt before achieving the correct positioning and running the risk of dropping by gravity the elastic return element during the positioning attempts, which thus could be lost.

. In a step of maintenance of the lever assembly, during a disassembly of the primary lever from the body constrainable to the handlebar, the elastic return element of primary lever must be separated from its assembly position on the field, and, therefore, the elastic return element may fall by gravity resulting in an accidental loss of the elastic return element, slowing down or compromising the reassembly of the lever assembly until the elastic return element is replaced.

. Therefore, the need is strongly felt in the industry for a lever assembly which is capable of simplifying the assembly and maintenance operations of a lever assembly, reducing the risk of dropping by gravity and losing the elastic return element configured to bias the grippable lever constantly in the resting position.

### . Solution

. It is the object of the present invention to provide a lever assembly and a lever device, which allow obviating the problems complained of in the prior art.

. This and other objects and advantages are achieved by a lever device, a braking system, as well as a spring assembly according to independent claims.

. Some advantageous embodiments are the subject of the dependent claims.

. By virtue of the suggested solutions, the assembly of the lever device can be simplified by preassembling the primary lever and the elastic return element of primary lever, which allows avoiding gravity detachments between the preassembled components, allowing the maintenance operations to be simplified.

### . Figures

. Further features and advantages of the lever assembly and the lever device will become apparent from the following description of preferred embodiments thereof, given by way of non-limiting indication, with reference to the accompanying drawings, in which:

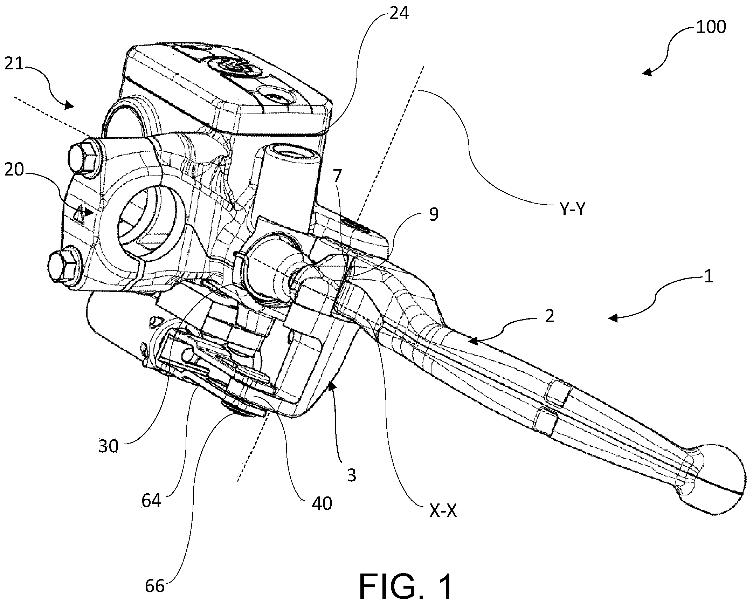

- figure 1 depicts an axonometric view of a lever device according to the present invention from a first direction of view, in which a lever assembly according to the present invention can be seen;

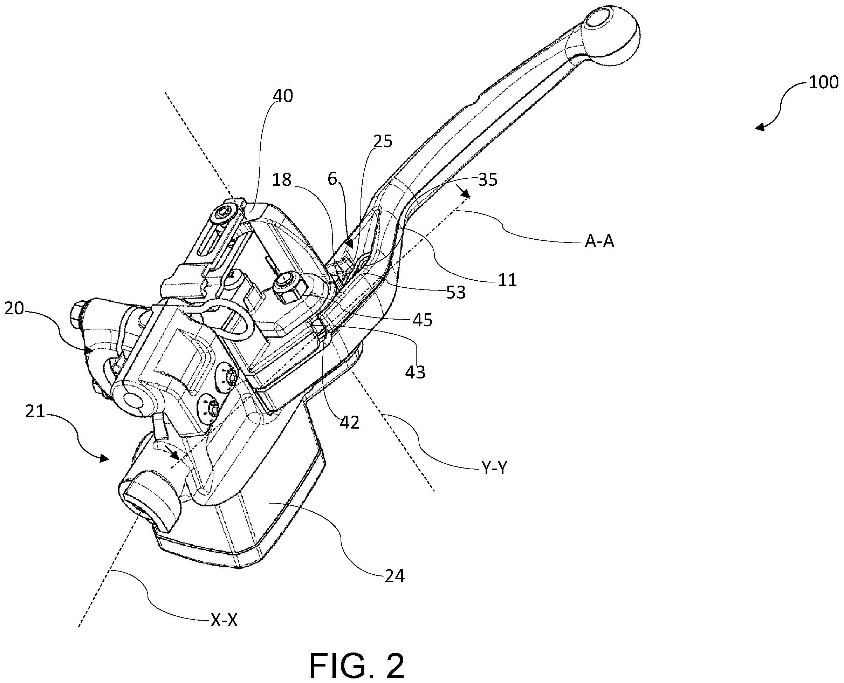

- figure 2 depicts an axonometric view of the lever device in figure 1 from a second direction of view;

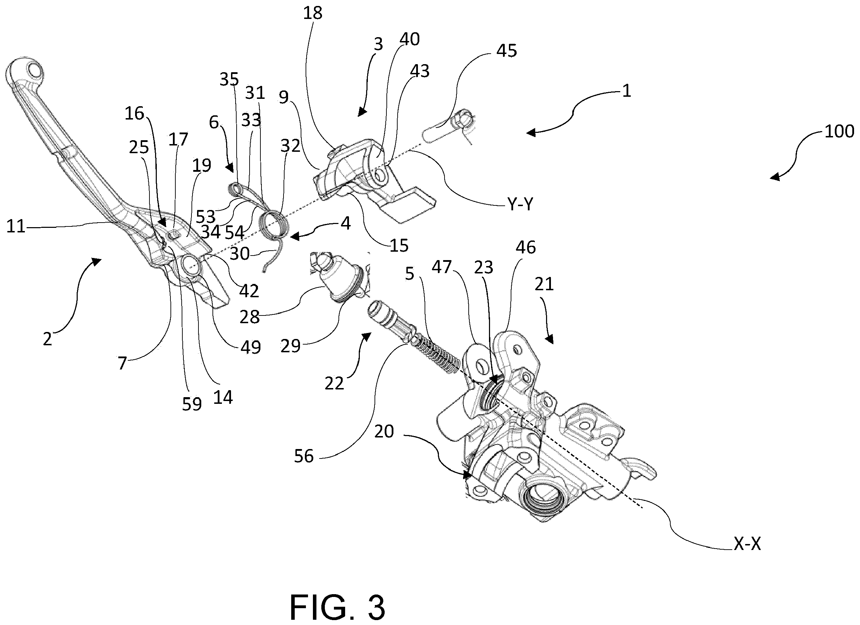

- figure 3 shows an axonometric view of the lever device in figure 2 in an exploded view;

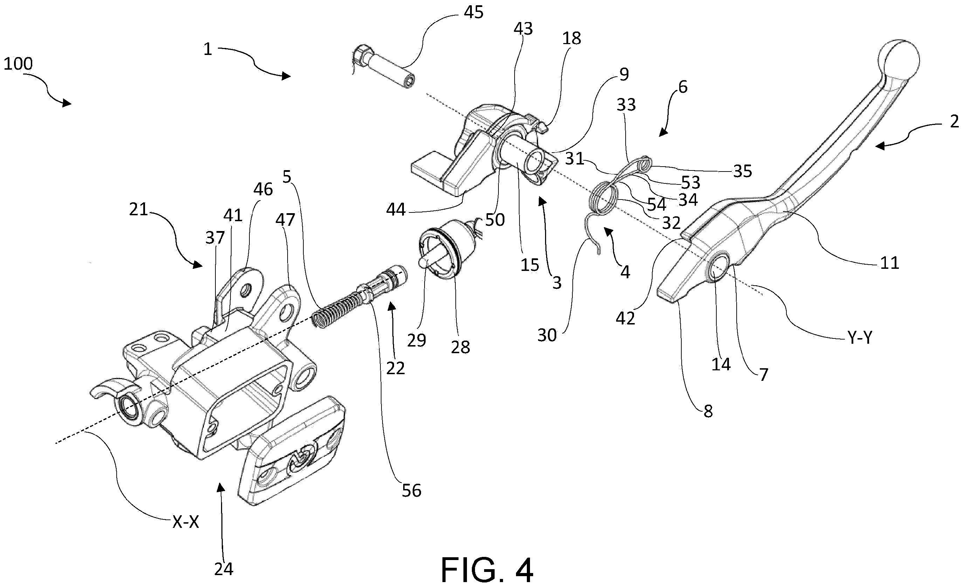

- figure 4 shows an axonometric view of the lever device in figure 1 in an exploded view;

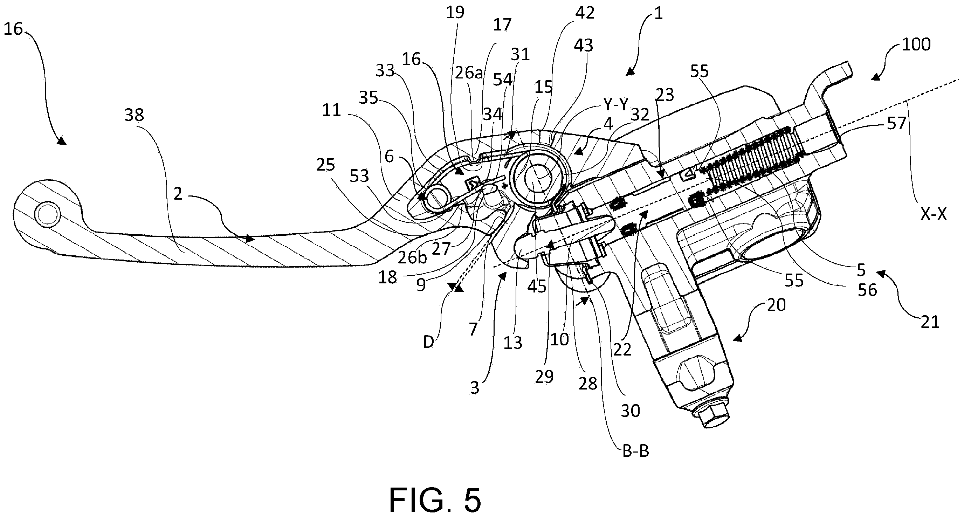

- figure 5 shows a section view of the lever device taken along a section plane A-A shown in figure 2;

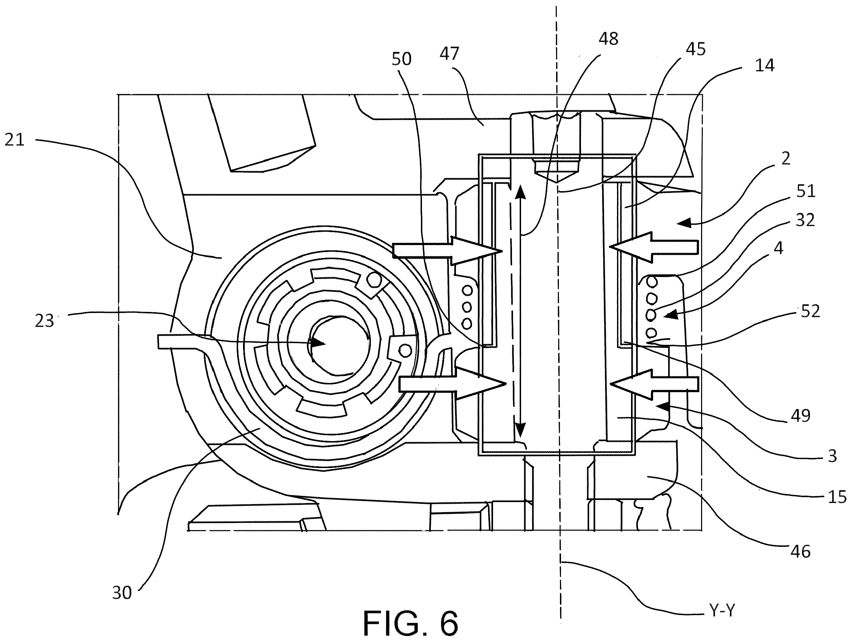

- figure 6 shows a section view of the lever device taken along a section plane B-B in figure 5;

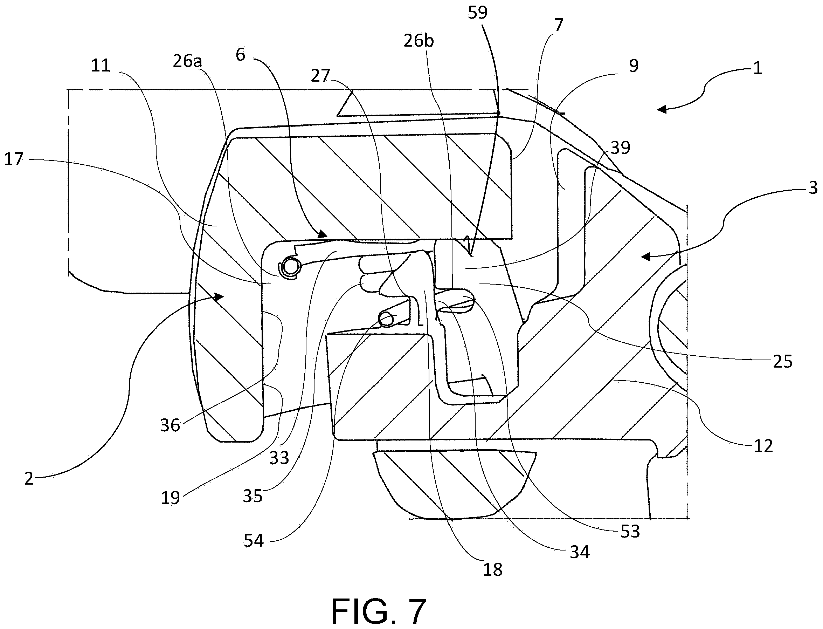

- figure 7 shows a partial section view of the lever device;

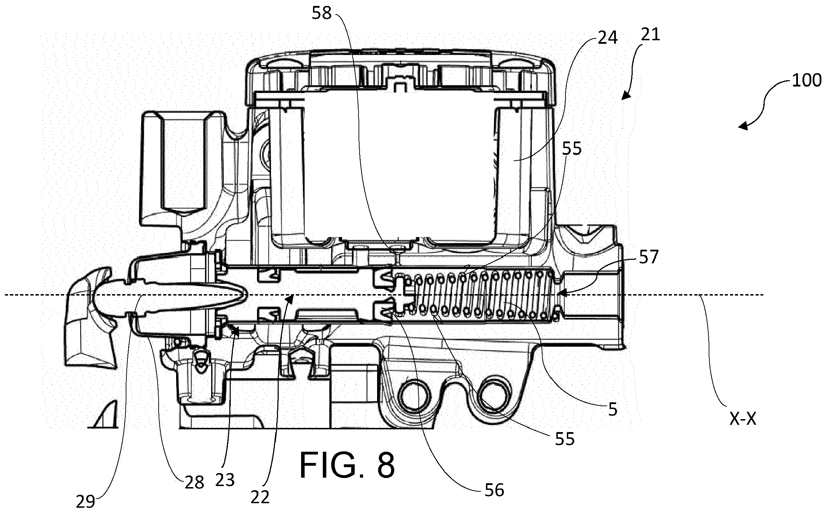

- figure 8 show a section view of the master cylinder body of the lever device, in which the piston or float movably inserted into the master cylinder body cavity can be seen, where the master cylinder body cavity is in fluid communication with an associable tank by means of a supply channel;

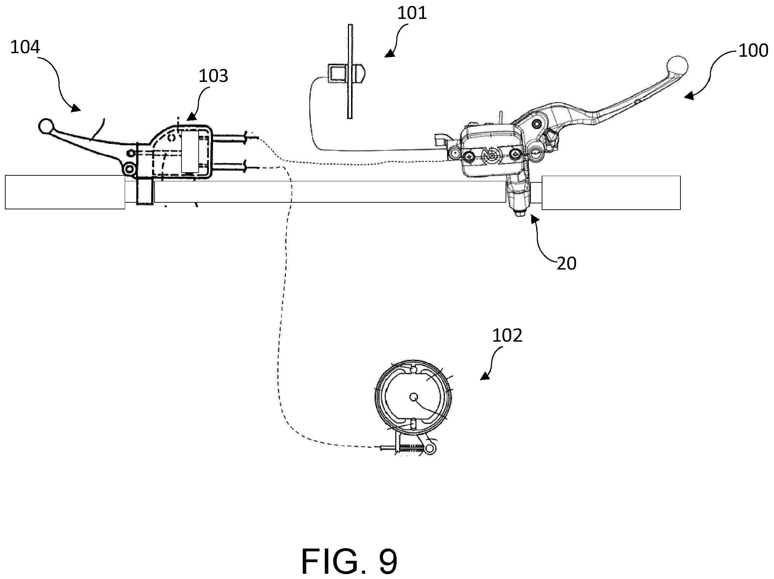

- figure 9 diagrammatically shows a braking system of the combined front-rear type, comprising a lever device in figure 1 operatively connected to a front brake and a second lever operatively connected to a rear brake and the lever device, in which the activation of the second lever activates both the rear brake, preferably a drum brake, and the front brake, preferably a disc brake;

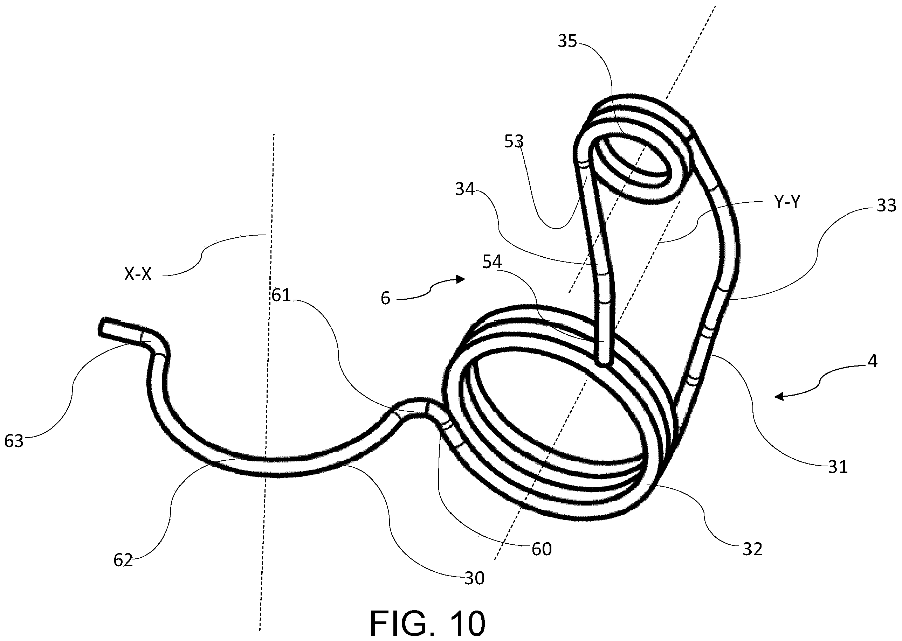

- figure 10 shows an axonometric view of a spring assembly used in the lever device in figure 1;

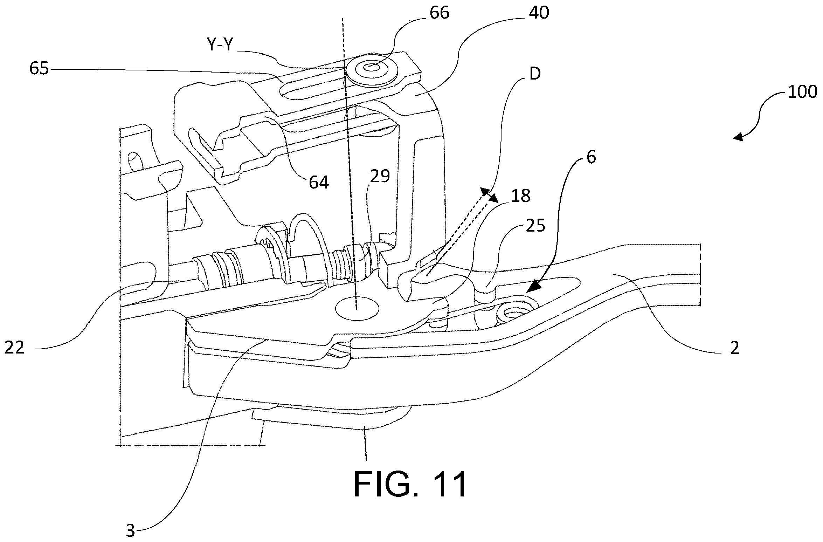

- figure 11 shows the lever device in figure 2, in which the primary lever and the secondary lever are in the respective resting positions, and in which the thrust portion of the primary lever and the counter-abutment portion of the secondary lever are kept spaced apart from each other by the elastic relative-load element;

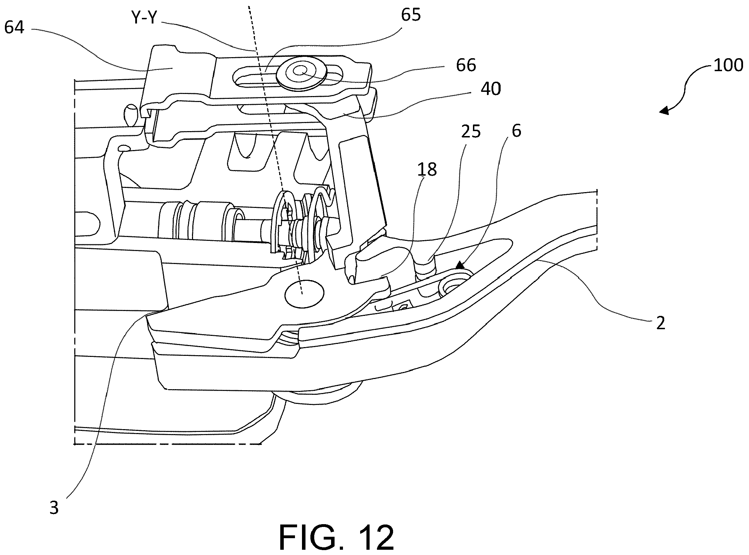

- figure 12 shows the lever device in figure 2, in which the primary lever is driven into rotation by a user from the resting position to the at least one primary lever actuation position, and the secondary lever is rotated to the at least one secondary lever actuation position by the thrust action of the thrust portion against the counter-abutment portion of the secondary lever by actuating the braking device and/or the brake master cylinder;

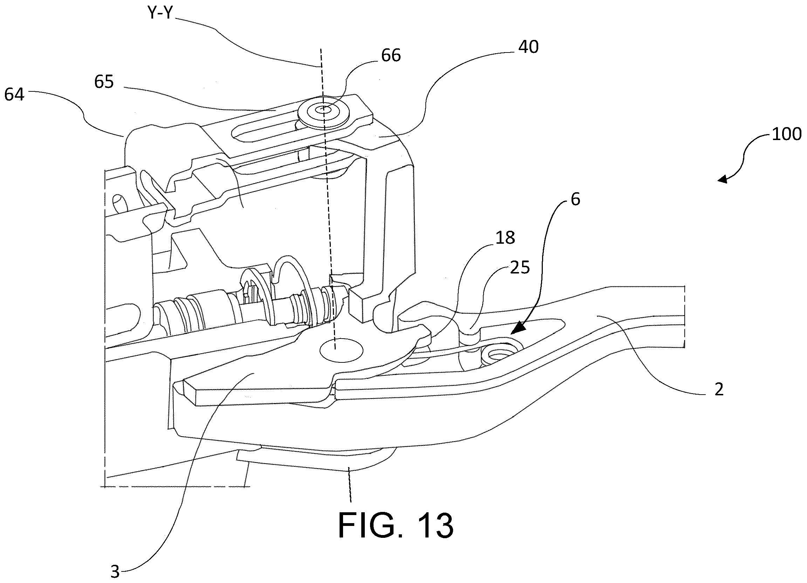

- figure 13 shows the lever device in figure 2, in which the primary lever is in the primary lever resting position, and the secondary lever rotated from the secondary lever resting position is in the at least one secondary lever actuation position by the pulling action of the combined-action braking mechanism which pulls a combined braking connecting portion 40 of the secondary lever, e.g., by means of the shaped metal sheet 64.

### . Description of some preferred embodiments

. According to a general embodiment, a lever assembly for a lever device 100 configured to hydraulically actuate a first braking device or front braking device 101 of a handlebar vehicle is indicated by reference numeral 1.

. The lever device 100 comprises a master cylinder body 21 comprising connecting means 20 to constrain the master cylinder body 21 to a handlebar of the handlebar vehicle. Said master cylinder body 21 comprises cylinder walls 55 delimiting a cavity or cylinder 23.

. The lever device 100 comprises at least one float or piston 22 operatively associated with the master cylinder body 21, so as to be adapted to slide inside the cavity or cylinder 23 along a thrust direction X-X. The float or piston 22 comprises a piston bottom 56 defining, with the cylinder walls 55 of the master cylinder body 21, at least one pressure chamber 57 configured to accommodate an actuating fluid of the first braking device or front braking device 101. At least one of the cylinder walls 55 is interrupted to delimit at least one supply channel 58 configured to put in fluid communication the pressure chamber 57 with an associable fluid tank 24.

. The piston bottom 56 is movable with respect to said cylinder walls 55 between at least one end-of-stroke position, in which a volume of said pressure chamber 57 is maximum, and at least a first working position, in which in the at least a first working position, said piston bottom fluidly isolates said pressure chamber 57 from said supply channel 58 pressurizing the actuating fluid in the pressure chamber 57.

. The lever device 100 comprises an elastic return element 5 arranged inside said cavity or cylinder and interposed between said piston bottom 56 and a cylinder seat or shoulder defined by the cylinder walls 55 so as to constantly bias the piston or float 22 elastically towards the end-of-stroke position. In other words, the elastic return element 5 allows for a return up to the end-of-stroke position of the piston or float 22 upon cessation of the actuation of the lever device 100 by the user.

. The lever assembly 1 comprises a primary lever 2 rotatably associable with the master cylinder body 21 so as to rotate about at least one pivot axis Y-Y. Said primary lever is connectable and/or connected, either directly or indirectly, to said float or piston 22.

. The primary lever 2 is rotatable about the at least one pivot axis Y-Y between a primary lever resting position, and at least one primary lever actuation position, in which, in the at least one primary lever actuation position, the primary lever 2 directly or indirectly biases said float or piston 22. In an embodiment, in the at least one primary lever actuation position, the primary lever thrust portion 7 is in direct or indirect contact with the secondary lever counter-abutment portion 9, so as to bias, by means of the secondary lever or hub 3, the float or piston 22 at least when it is in the at least a first working position.

. The lever assembly 1 comprises an elastic return element 4 of primary lever configured to elastically bias the primary lever 2 to the primary lever resting position.

. The elastic return element 4 of primary lever is a torsional spring comprising at least a first elastic return element winding 32, a first arm 30 of first elastic return element, and a second arm 31 of first elastic return element extending from said first elastic return element winding 32.

**.** The primary lever 2 comprises a primary lever body 11. The primary lever body 11 defines a primary lever recessed housing or seat 16 adapted to accommodate at least partially the elastic return element 4 of primary lever. The primary lever body 11 comprises at least a first primary lever connecting element 17.

. Advantageously, the first primary lever connecting element 17 comprises a first primary lever connecting element coupling portion 26a configured to couple the second arm 31 of first elastic return element so that, when the second arm 31 of first elastic return element is coupled to the first primary lever connecting element 17, the elastic return element 4 of primary lever is preassembled to the primary lever 2 irrespective of the connection of the primary lever 2 to the master cylinder body 21.

. In an embodiment, the primary lever 2 comprises a primary lever bushing 14 extending from the primary lever body 11 into the housing 16. In an embodiment, the primary lever bushing 14 is configured to directly or indirectly accommodate a rotation pin 45. In an embodiment, the rotation pin 45 is configured to connect the lever assembly 1 to a first connecting bracket 46 and a second connecting bracket 47 of the master cylinder body 21 spaced apart along a direction parallel to the pivot rotation axis Y-Y fixing the rotation pin 45 to appropriate perforated seats made in the connecting brackets 46, 47 coaxial to the pivot rotation axis Y-Y.

. In an embodiment, the at least a first elastic return element winding 32 is fitted onto the outer surface of the primary lever bushing 14 and abuts against an annular primary lever wall 51 extending about the base of the primary lever bushing 14.

. In an embodiment, when the at least a first elastic return element winding 32 is fitted onto the primary lever bushing 14, and the second arm 31 of first elastic return element is coupled to the first primary lever connecting element 17 and/or to a second primary lever connecting element 25, the elastic return element 4 of primary lever is preassembled to the primary lever 2 irrespective of the connection of the primary lever 2 with the master cylinder body 21 by means of the rotation pin 45..

. In an embodiment, the primary lever body 11 comprises a second primary lever connecting element 25.

. In an embodiment, the second primary lever connecting element 25 comprises a second primary lever connecting element coupling portion 26b configured to couple the second arm 31 of first elastic return element so that, when the second arm 31 of first elastic return element is coupled to the first primary lever connecting element 17 and to the second primary lever connecting element 25, the elastic return element 4 of primary lever is preassembled to the primary lever 2 irrespective of the connection of the primary lever 2 with the master cylinder body 21.

. In an embodiment, the primary lever body 11 comprises an inner housing side wall 19 delimiting the housing 16. In an embodiment, the primary lever body 11 comprises a bottom housing wall 59 connected to the housing side wall 19, and substantially orthogonal to the direction of the pivot axis Y-Y. In an embodiment, the inner housing side wall 19 delimits the housing 16, either laterally or circumferentially, with respect to radial directions orthogonal to the direction of the pivot axis Y-Y. In an embodiment, the inner housing side wall 19 extends forming a concave portion, preferably with concavity facing the pivot axis Y-Y. In an embodiment, the inner housing side wall 19 comprises a first inner wall portion 36 and a second inner wall portion 39. In an embodiment, the first inner wall portion 36 and a second inner wall portion 39 delimit the housing 16 on opposite sides. In an embodiment, the first inner wall portion 36 and the second inner wall portion 39 delimit the concave portion of the housing on opposite sides. In an embodiment, the first inner wall portion 36 and the second inner wall portion 39 substantially face each other. In an embodiment, in a section of the primary lever body orthogonal to the direction of the pivot axis Y-Y, the inner housing side wall 19 forms at least one U- or V-shaped portion, where the first inner wall portion 36 and the second inner wall portion 39 are on opposite sides of the U- or V-shaped portion and are connected by an inner wall connecting portion, preferably curved.

. In an embodiment, the first inner wall portion 36 comprises the first primary lever connecting element 17. In an embodiment, the second inner wall portion 39 comprises the second primary lever connecting element 25.

. In an embodiment, the second arm 31 of first elastic return element comprises, moving away from the first elastic return element winding 32, an elastic relative-load element 6.

. In an embodiment, the elastic relative-load element 6 comprises a first arm 33 of elastic relative-load element and a second arm 34 of elastic relative-load element, where the first arm 33 of elastic relative-load element and the second arm 34 of elastic relative-load element elastically oppose a mutual approach.

. In an embodiment, the first arm 33 of elastic relative-load element is coupled to the first primary lever connecting element coupling portion 26a. In an embodiment, the second arm 34 of elastic relative-load element is coupled to the second primary lever connecting element coupling portion 26b. By virtue of the provision of the second arm 31 of first elastic return element comprising and/or folded so that the first arm 33 of first elastic relative-load element and the second arm 34 of second elastic relative-load element elastically oppose a mutual approach, it is possible to keep the first arm 33 of elastic relative-load element and the second arm 34 of elastic relative-load element elastically abutting coupled to the first primary lever connecting element coupling portion 26a and to the second primary lever connecting element coupling portion 26b so that the elastic return element 4 of primary lever is preassembled to the primary lever 2 irrespective of the connection of the primary lever 2 to the master cylinder body 21.

. In an embodiment, when the at least a first elastic return element winding 32 is fitted onto the primary lever bushing 14, the first arm 33 of elastic relative-load element and the second arm 34 of elastic relative-load element are coupled to the first primary lever connecting element 17 and/or the second primary lever connecting element 25, the elastic return element 4 of primary lever is preassembled to the primary lever 2 irrespective of the connection of the primary lever 2 to the master cylinder body 21 by means of the rotation pin 45.

. In an embodiment, each primary lever connecting element 17, 25 is a stud which is in relief with respect to an inner housing side wall 19 delimiting the housing 16.

. In an embodiment, each primary lever connecting element 17, 25 is a stud which is in relief with respect to a housing bottom side wall 59 delimiting the housing 16.

. In an embodiment, each stud is adapted to limit the movements of the elastic return element 4 of primary lever along directions parallel to the pivot axis Y-Y.

. In an embodiment, each primary lever connecting element coupling portion 26a, 26b is an undercut portion adapted to limit the movements of the elastic relative-load element 6 along directions parallel to the pivot axis Y-Y.

. In an embodiment, said lever assembly 1 comprises a secondary lever or hub 3 rotatably associated with the master cylinder body 21, the secondary lever 3 comprising a secondary lever counter-abutment portion 9. The secondary lever or hub 3 is connectable and/or connected, either directly or indirectly, to said float or piston 22.

. In an embodiment, the secondary lever 3 is rotatable about the at least one pivot axis Y-Y, or an axis parallel thereto, between a secondary lever resting position, and at least one secondary lever actuation position, where, in the at least one secondary lever actuation position, the secondary lever 3 biases an advancement of the float or piston 22 towards the at least one working position. In an embodiment, the secondary lever 3 is elastically biased to the resting position by the elastic return element 5. In an embodiment, the secondary lever 3 can rotate about the same pivot axis Y-Y about which the primary lever 2 is rotatable, or can rotate about a secondary lever pivot axis which is parallel to the at least one pivot axis Y-Y.

. In an embodiment, the secondary lever 3 is operatively connectable to a combined braking mechanism 103 actuatable by a combined-action lever 104 so that the secondary lever 3 is also drivable into rotation from the secondary lever resting position to the at least one secondary lever actuation position by actuating a combined-action lever 104 connected to a second braking device or rear braking device 102 to activate the first braking device 101 and the second braking device 102 in a combined manner irrespective of an actuation of the primary lever 2. According to an embodiment, the secondary lever 3 comprises a combined braking connecting portion 40 operatively connectable to the combined braking mechanism 103, e.g., by means of a shaped metal sheet 64. In an embodiment, the shaped metal sheet 64 defines a linear guide 65 along which a sliding pin 66 of the combined braking connecting portion 40 is slidably guided when the secondary lever 3 is driven into rotation by the primary lever 2. In an embodiment, the shaped metal sheet 64 is connectable to an actuating cable of the combined braking mechanism 103, so that by actuating the actuating cable, the shaped metal sheet 64 transmits the actuating force from the actuating cable to the combined braking connecting portion 40 allowing a rotation of the secondary lever 3 irrespective of the actuation of the primary lever 2.

. In an embodiment, the secondary lever 3 comprises a secondary lever connecting element 18. In an embodiment, the secondary lever connecting element 18 comprises a secondary lever connecting element coupling portion 27 configured to couple a distal portion 54 of second arm of elastic relative-load element.

. In an embodiment, the secondary lever or hub 3 comprises a secondary lever bushing 15.

. In an embodiment, the primary lever bushing 14 comprises a substantially cylindrical bushing body and a through hole coaxial to the pivot axis Y-Y. In an embodiment, the secondary lever bushing 15 comprises a respective substantially cylindrical body and a through hole coaxial the pivot axis Y-Y. In an embodiment, the primary lever bushing 14 is made in one piece with the primary lever body 11. In an embodiment, the primary lever bushing 14 defines a cylindrical primary lever coupling surface on the primary lever body 11. In an embodiment, the secondary lever bushing 15 is made in one piece with the secondary lever body 12. In an embodiment, the secondary lever bushing 15 defines a cylindrical secondary lever coupling surface on the secondary lever body 12.

. In an embodiment, the primary lever bushing 14 and the secondary lever bushing 15 are coaxial to the pivot axis Y-Y. In an embodiment, the primary lever bushing 14 is configured to accommodate the secondary lever bushing 15, or vice versa, so as to allow a rotation of the primary lever 2 with respect to the secondary lever 3 about the pivot axis Y-Y when the primary lever bushing 14 and the secondary lever bushing 15 are mutually coupled.

. In an embodiment, either the primary lever bushing 14 or the secondary lever bushing 15 is configured to accommodate a rotation pin 45.

. In an embodiment, the lever device 100 comprises at least one connecting bracket 46, 47 constrained to the master cylinder body 21 or made in one piece with the master cylinder body to allow a rotatable connection between the master cylinder body and the lever assembly by means of the rotation pin 45.

. In an embodiment, the lever device 100 comprises a first connecting bracket 46 and a second connecting bracket 47, where the connecting brackets 46, 47 are constrained to the master cylinder body 21 or made in one piece with the master cylinder body. In an embodiment, the connecting brackets 46, 47 are spaced apart along a direction parallel to the pivot rotation axis Y-Y and have appropriate pierced seats made in the connecting brackets 46, 47 coaxial with the pivot rotation axis Y-Y to fix the rotation pin 45 to the master cylinder body 21.

. In an embodiment, the lever device 100 comprises said rotation pin 45 to connect the lever assembly 1 fixed to the first connecting bracket 46 and to the second connecting bracket 47. In an embodiment, the first arm 33 of elastic relative-load element and the second arm 34 of elastic relative-load element are coupled to the first primary lever coupling portion 26a and the secondary lever connecting element coupling portion 27, respectively, by biasing the primary lever 2 and the secondary lever 3 along directions transverse to the pivot axis Y-Y thus preventing a separation between the primary lever 2 and the secondary lever 3 along directions parallel to the pivot axis Y-Y.

. In an embodiment, the primary lever comprises a primary lever thrust portion 7.

. In an embodiment, the lever assembly 1 comprises an elastic relative load element 6 which is connected to the primary lever 2 and/or the secondary lever 3. The elastic relative-load element 6 is interposed between a first primary lever connecting element 17 of the primary lever 2 and a secondary lever connecting element 18. In an embodiment, the elastic relative-load element 6 is configured to apply an elastic spacing action which opposes an approach of the secondary lever counter-abutment portion 9 to the primary lever thrust portion 7, or vice versa, so that when the primary lever 2 and the secondary lever or hub 3 are in the respective resting positions, the elastic relative-load element 6 avoids the direct or indirect rubbing contact between the secondary lever counter-abutment portion 9 and the primary lever thrust portion 7. In an embodiment, the elastic relative-load element 6 is configured to apply an elastic spacing action which opposes an approach of the secondary lever counter-abutment portion 9 to the primary lever thrust portion 7, or vice versa, so that the primary lever 2 is rotatable about the at least one pivot axis Y-Y between the primary lever resting position and the at least one primary lever actuation position by overcoming the elastic spacing action of the elastic relative load element 6, taking the primary lever thrust portion 7 close to the secondary lever counter-abutment portion 9 until it contacts it either directly or indirectly. In other words, the elastic relative-load element 6 allows avoiding a direct or indirect contact between the secondary lever counter-abutment portion 9 and the primary lever counter-abutment portion 7 until the elastic spacing action is completely overcome by the rotation of the primary lever 2 under the bias of a user by taking it close to the handlebar, contacting, in the at least one primary lever actuation position, the primary lever counter-abutment portion 7 with the secondary lever counter-abutment portion 9.

. In an embodiment, in the at least one primary lever actuation position, the primary lever thrust portion 7 is in direct contact with the secondary lever counter-abutment portion 9, avoiding an interposition between the secondary lever counter-abutment portion 9 and the primary lever thrust portion 7 of non-metal elements subject to wear by rubbing.

. By virtue of some suggested solutions, it is possible to keep a thrust portion of the primary lever and a counter-abutment portion of the secondary lever spaced apart without direct or indirect contact from an elastic relative-load element when the primary lever and/or the secondary lever are not activated by a user to operate the braking system. The vibrations, e.g., due to the motion of the handlebar vehicle, transmitted to the primary lever and the secondary lever, are thus dampened by the elastic relative-load element, avoiding rubbing between the thrust portion of the primary lever and the counter-abutment portion of the secondary lever, which can result in annoying noises as well as accelerated wear of the two facing surfaces and/or rubber or similar components constrained to one of the two facing surface.

. By virtue of some suggested solutions, it is possible to achieve a direct or indirect contact between the primary lever thrust portion and the secondary lever counter-abutment portion only when the primary lever is activated by a user to actuate the braking system, such as a first braking device, by overcoming the elastic spacing action generated by the elastic relative-load element, and avoiding, under conditions of release of the primary lever by the user, a direct or indirect contact between the primary lever thrust portion and the secondary lever counter-abutment portion.

. By virtue of some suggested solutions, it is possible to achieve a direct, metal-surface-to-metal-surface contact between the primary lever thrust portion and the secondary lever counter-abutment portion only when the primary lever is activated by a user to operate the braking system.

**.** In an embodiment, the primary lever connecting element 17 and the secondary lever connecting element 18 are distinct from the primary lever thrust portion 7 and the secondary lever counter-abutment portion 9, respectively.

. In an embodiment, when the primary lever 2 and the secondary lever or hub 3 are in the respective resting positions, the elastic relative-load element 6 biases the first primary lever connecting element 17 and the secondary lever connecting element 18 while keeping a spacing clearance D between the primary lever thrust portion 7 and the secondary lever counter-abutment portion 9 between 0.05 mm and 5 mm, preferably between 0.1 mm and 1 mm.

. In an embodiment, said lever device 100 comprises at least one thrust transmission element or actuation pin 29 interposed between the piston or float 22 and the lever assembly 1, in particular the secondary lever 3, and adapted to transmit the thrust action between the lever assembly 1 and the piston or float 22. In an embodiment, said thrust transmission element 29 comprises a shaft 10 and a push rod 13. According to an embodiment, said thrust transmission element 29 is associated with a dust cuff 28 which prevents impurities from entering into the cavity 23 of the master cylinder body 21.

. In an embodiment, the rotation pin 45 comprises a pin guide portion 48 which is a cylindrical portion extending without shoulders at least between the first connecting bracket 46 and the second connecting bracket 47 so that the primary lever bushing 14 and the secondary lever bushing 15 are guided over the entire length of the pin guide portion 48.

. In an embodiment, the elastic relative-load element 6 is configured to mutually connect the primary lever 2 and the secondary lever or hub 3 irrespective of a connection of the primary lever 2 and the secondary lever 3 with the master cylinder body 21 by means of said rotation pin 45.

. In an embodiment, the primary lever 2 comprises a primary lever stop wall 42 and where the secondary lever 3 comprises a secondary lever stop counter-wall 43.

. In an embodiment, when the primary lever 2 and the secondary lever 3 are disconnected from the master cylinder body 21, and when the primary lever bushing 14 and the secondary lever bushing 15 are mutually coupled, the elastic relative-load element 6 is interposed between the first primary lever connecting element 17 of the primary lever 2 and the secondary lever connecting element 18, by rotationally biasing the secondary lever counter-abutment portion 9 about the pivot axis Y-Y away from the primary lever thrust portion 7 and by rotationally biasing the primary lever stop wall 42 against the secondary lever counter-abutment wall 43 about the pivot axis Y-Y, or vice versa, defining the resting position of the primary lever 3 and the secondary lever 2, and mutually connecting the primary lever 2 and the secondary lever or hub 3 when preassembled without being connected to the master cylinder body 21, and/or mutually connecting the primary lever 2 and the secondary lever or hub 3 by friction between the primary lever stop wall 42 abutting against the secondary lever stop counter-wall 43 which avoids separation of the primary lever 2 from the secondary lever 3 along a direction parallel to the pivot axis Y-Y, irrespective of the connection of the primary lever 2 and the secondary lever 3 with the master cylinder body 21 by means of the rotation pin 45.

. In an embodiment, the primary lever bushing 14 accommodates the secondary lever bushing 15. In an embodiment, the primary lever bushing 14 comprises a bushing end 49 configured to abut against an annular seat 50 defined outside the base or root of the secondary lever bushing 15.

. In an embodiment, the primary lever body 11 defines a primary lever recessed housing or seat 16 adapted to accommodate the elastic relative-load element 6.

. In an embodiment, the first arm 30 of first elastic return element is configured to abut against a portion of the master cylinder body 21.

. In an embodiment, the second arm 31 of first elastic return element is configured to abut against a portion of the primary lever 2, preferably against the inner housing side wall 19.

. In an embodiment, the at least a first elastic return element winding 32 is fitted onto the outer surface of the primary lever bushing 14 and abuts between an annular secondary lever wall 52, extending about the base of the secondary lever bushing 15, and an annular primary lever wall 51 extending about the base of the primary lever bushing 14.

. In an embodiment, the elastic relative-load element 6, the second arm 31 of first elastic return element, and the at least a first elastic return element winding 32 are arranged inside the housing 16 forming a weatherproof shell.

. In an embodiment, the at least a first elastic return element winding 32 comprises a plurality of windings coaxial to the pivot Y-Y. In an embodiment, the plurality of windings is configured to provide an axial thrust between the primary lever 2 and the secondary lever 3 so as to correct any clearance along directions parallel to the pivot axis Y-Y between the lever assembly 1 and the master cylinder body 21.

. In an embodiment, the elastic relative-load element 6 comprises an elastic element body, e.g., a metal wire body or metal plate, bent so that the first arm 33 of elastic relative-load element and the second arm 34 of elastic relative-load element elastically oppose a mutual approach.

. In an embodiment, the primary lever 2 comprises a second primary lever connecting element 25. In an embodiment, the second primary lever connecting element 25 is made on the second inner wall portion 39. In an embodiment, the first primary lever connecting element 17 is made on the first inner wall portion 36.

. In an embodiment, the first primary lever connecting element 17 and the second primary lever connecting element 25 each comprise a respective primary lever connecting element coupling portion 26a, 26b configured to be coupled to the first arm 33 of elastic relative-load element and a proximal portion 53 of second arm of elastic relative-load element, respectively, so as to couple the elastic relative-load element 6 to the primary lever 2 irrespective of the presence of the secondary lever or hub 3.

. In an embodiment, the secondary lever connecting element 18 comprises a secondary lever connecting element coupling portion 27 configured to couple a distal portion 54 of second arm of elastic relative-load element.

. In an embodiment, when the first arm 33 of elastic relative-load element and the second arm 34 of elastic relative-load element are coupled to the respective coupling portions 26a, 26b, 27 by biasing the primary lever 2 and the secondary lever 3 along directions transverse to the pivot axis Y-Y of the lever assembly 1, a separation between the primary lever 2 and the secondary lever 3 along directions parallel to the pivot axis Y-Y is prevented by moving the primary lever 2 and the secondary lever 3..

. In an embodiment, each primary lever connecting element 17, 25 is a stud which is in relief with respect to an inner housing side wall 19 and each stud is adapted to limit the movements of the elastic relative-load element 6 along directions parallel to the pivot axis Y-Y. In an embodiment, the first primary lever connecting element 17 is a first stud or first element in relief along a direction orthogonal to the pivot axis Y-Y with respect to the first inner wall portion 36, which comprises a groove adapted to accommodate at least one portion of the first arm 33 of elastic relative-load element. In an embodiment, the second primary lever connecting element 25 is a second stud or second element in relief along a direction orthogonal to the pivot axis Y-Y with respect to the second inner wall portion 39, which comprises a groove adapted to accommodate a proximal portion 53 of second arm of elastic relative-load element of the second arm 34 of elastic relative-load element.

. In an embodiment, the secondary lever 3 comprises a secondary lever body 12, where the secondary lever connecting element 18 is a tab projecting from the secondary lever body 12 mainly along a direction parallel to the pivot axis Y-Y.

. In an embodiment, the secondary lever connecting element 18 projects into the housing 16 when the primary lever 2 is connected to the secondary lever 3.

. In an embodiment, each primary lever connecting element coupling portion 27 is an undercut portion adapted to limit the movements of the elastic relative-load element 6 along directions parallel to the pivot axis Y-Y.

. In an embodiment, each primary lever connecting element coupling portion 26 comprises a groove made in the respective primary lever connecting element 17, 25, where the groove is in a plane transverse to the pivot axis Y-Y.

. In an embodiment, each secondary lever connecting element coupling portion 27 comprises a groove made in the respective secondary lever connecting element 18. In an embodiment, the groove is in a plane transverse to the pivot axis Y-Y.

. In an embodiment, the elastic relative-load element 6 is a torsional elastic element.

. In an embodiment, the elastic relative-load element 6 is a wire spring.

. In an embodiment, the elastic relative-load element 6 comprises at least one elastic relative-load element winding 35 wound about a direction parallel to the pivot axis Y-Y, where the first arm 33 of elastic relative-load element and the second arm 34 of elastic relative-load element extend from the at least one elastic relative-load element winding 35 to bias the primary lever 2 and the secondary lever 3 elastically.

. In an embodiment, the elastic return element 4 of primary lever is a wire spring.

**.** In an embodiment, the elastic return element 4 of primary lever and the elastic relative-load element 6 are integrated, preferably made from a wire.

**.** In an embodiment, the primary lever 2 comprises a grippable portion 38 of primary lever configured to be gripped by a user to rotate the primary lever 2 with respect to the master cylinder body 21 towards the handlebar in the plurality of primary lever actuation positions.

**.** In an embodiment, the primary lever 2 comprises a primary lever anti-rotation portion 8 configured to abut against a first master cylinder body abutment portion 41 of the master cylinder body 21 defining the resting position of the primary lever and preventing a rotation of the primary lever 2 away from the handlebar towards the master cylinder body 21.

**.** In an embodiment, the secondary lever 3 comprises a combined braking connecting portion 40 configured to operatively connect the secondary lever 3 to the combined braking mechanism 103.

**.** In an embodiment, the secondary lever 3 comprises a secondary lever anti-rotation portion 44 configured to abut against a second master cylinder body abutment portion 37 of the master cylinder body 21 defining the resting position of the secondary lever and preventing a rotation of the secondary lever 3 away from the handlebar towards the master cylinder body 21. In an embodiment, the second abutment portion 37 of master cylinder body and the first abutment portion 41 of master cylinder body belong to the same master cylinder body surface.

**.** In an embodiment, the at least one elastic relative-load element winding 35 is accommodated inside the housing 16.

**.** In an embodiment, the first arm 33 of elastic relative-load element is coupled to the first primary lever connecting element 17 and the second arm 34 of elastic relative-load element is coupled, with a portion 53 thereof close to the at least one elastic relative-load element winding 35, to the second primary lever connecting element 25 so that when the elastic relative-load element 6 is inserted into the housing 16 of the primary lever 2 coupled to the first primary lever connecting element 17 and to the second primary lever connecting element 25, with the first arm 33 of elastic relative-load element elastically abutting against the first primary lever connecting element 17 and with the second arm 34 of elastic relative-load element elastically abutting against the second connecting element 25 of primary lever, the elastic relative-load element 6 is connected to the primary lever 2 avoiding possible gravity falling from the housing 16 irrespective of the presence of the secondary lever 3 and/or irrespective of the connection of the lever assembly 1 with the master cylinder body 21.

**.** The present invention also relates to a lever device 100 configured to hydraulically actuate a first braking device or front braking device 101 of a handlebar vehicle.

**.** The lever device comprises a lever assembly 1 according to any one the previously described embodiments.

. The lever device 100 comprises a master cylinder body 21 comprising connecting means 20 to constrain the master cylinder body 21 to a handlebar of the handlebar vehicle, said master cylinder body 21 comprising cylinder walls 55 delimiting a cavity or cylinder 23. The lever device 100 comprises at least one float or piston 22, operatively associated with the master cylinder body 21, so as to be adapted to slide inside the cavity or cylinder 23 along a thrust direction X-X, said float or piston 22 comprising a piston bottom 56 defining, with the cylinder walls 55 of the master cylinder body 21, at least one pressure chamber 57 configured to accommodate an actuating fluid of the first braking device or front braking device 101, where at least one of the cylinder walls 55 is interrupted to delimit at least one supply channel 58 configured to put the pressure chamber 57 in fluid communication with at least one associable fluid tank 24. The piston bottom 56 is movable with respect to said cylinder walls 55 between at least one end-of-stroke position, in which a volume of said pressure chamber 57 is maximum, and at least a first working position, in which said piston bottom fluidly isolates said pressure chamber 57 from said supply channel 58 pressurizing the actuating fluid in the pressure chamber 57. The lever device 100 comprises an elastic return element 5 arranged inside said cavity or cylinder and interposed between said piston bottom 56 and a cylinder seat defined by the cylinder walls 55 so as to constantly bias the piston or float 22 elastically towards the end-of-stroke position. The lever assembly 1 is rotatably associated with the master cylinder body 21 so as to rotate about at least one pivot axis Y-Y. The lever assembly 1 is connected either directly or indirectly to said float or piston 22.

**.** The present invention also relates to a braking system for a handlebar vehicle comprising a lever device 100 according to any one of the previously described embodiments, connected or connectable to the handlebar of the handlebar vehicle.

**.** In an embodiment, the braking system comprises a front braking device 101 operatively connected to the lever device 100, preferably a disc brake.

**.** In an embodiment, the braking system comprises a combinable action lever device comprising a combined action lever 104 and a combined braking mechanism 103 actuatable by the combined action lever 104.

**.** In an embodiment, the braking system comprises a rear braking device 102, preferably a drum brake, where the combined braking mechanism is operatively connected to the rear braking device 102 and also to the first braking device 101 by means of the lever device 100, so that the actuation of the combined-action lever device activates the first braking device 101 and the second braking device 102 in a combined manner irrespective of an actuation of the primary lever 2.

**.** The present invention also relates to a spring assembly for a lever assembly 1 of a lever device 100. According to an embodiment, the lever device 100 is according to one or more of the previously described embodiments. The lever device 100 is configured to hydraulically actuate a first braking device or front braking device 101 of a handlebar vehicle, where said lever assembly 1 comprises a primary lever 2 and a secondary lever 3 rotatably associable with a master cylinder body 21 to rotate about a pivot axis Y-Y, the primary lever comprising a primary lever thrust portion 7, the secondary lever or hub 3 being connectable directly or indirectly to a float or piston 22 associated with the master cylinder body 21, the secondary lever 3 comprising a secondary lever counter-abutment portion 9.

**.** Said spring assembly comprises an elastic return element 4 of primary lever adapted to be interposed between the master cylinder body 21 and the primary lever and configured to elastically bias the primary lever 2 to a primary lever resting position. Said elastic return element 4 of primary lever comprises a first arm 30 of first elastic return element and a second arm 31 of first elastic return element, where the first arm 30 of first elastic return element is configured to abut against a portion of the master cylinder 21, and where the second arm 31 of first elastic return element is configured to abut against a portion of the primary lever 2.

**.** Said spring assembly comprises an elastic relative-load element 6 adapted to be interposed between a first primary lever connecting element 17 of the primary lever 2 and a secondary lever connecting element 18, where the elastic relative-load element 6 is configured to apply an elastic spacing action which opposes an approach of the secondary lever counter-abutment portion 9 to the primary lever thrust portion 7 or vice versa.

**.** The elastic relative-load element 6 comprises a first arm 33 of elastic relative-load element adapted to be connected to the first primary lever connecting element 17 and a second arm 34 of elastic relative-load element adapted to be connected to the secondary lever connecting element 18.

**.** Advantageously, the first arm 33 of elastic relative-load element is connected to the second arm 31 of first elastic return element.

**.** In an embodiment, the first arm 33 of elastic relative-load element is integrated, preferably in one piece, with the second arm 31 of first elastic return element.

**.** In an embodiment, the elastic relative-load element 6 and the elastic return element 4 of primary lever are integrated, preferably made by bending the same metal wire.

**.** In an embodiment, the elastic relative-load element 6 is configured to be interposed between a first primary lever connecting element 17 of the primary lever 2 and a secondary lever connecting element 18, so that, when the primary lever 2 and the secondary lever or hub 3 are in the respective resting positions, the elastic relative-load element 6 avoids a direct or indirect contact by rubbing between the secondary lever counter-abutment portion 9 and the primary lever thrust portion 7, and so that the primary lever 2 is rotatable about the at least one pivot axis Y-Y between the primary lever resting position and the at least one primary lever actuation position, avoiding a direct or indirect contact between the secondary lever counter-abutment portion 9 and the primary lever thrust portion 7.

**.** In an embodiment, the elastic return element 4 of primary lever is a torsional spring comprising at least a first elastic return element winding 32, where the first arm 30 of first elastic return element and the second arm 31 of first elastic return element extend from said a first elastic return element winding 32.

**.** In an embodiment, the elastic relative-load element 6 comprises at least one elastic relative-load element winding 35 wound about a direction parallel to the pivot axis Y-Y, where a first arm 33 of elastic relative-load element, and a second arm 34 of elastic relative-load element extend from the at least one elastic relative-load element winding 35 to elastically bias the primary lever 2 and the secondary lever 3.

**.** In an embodiment, the at least a first elastic return element winding 32 comprises a plurality of windings coaxial to the pivot Y-Y, where the plurality of windings is configured to provide an axial thrust between the primary lever 2 and the secondary lever 3 so as to correct any clearance along directions parallel to the pivot axis Y-Y between the lever assembly 1 and the master cylinder body 21.

**.** In an embodiment, the at least a first elastic return element winding 32 and the at least one elastic relative-load element winding 35 extend helically about axes parallel to each other and parallel to the direction of the pivot axis Y-Y.

**.** In an embodiment, the first arm 30 of first elastic return element extends from the at least a first elastic return element winding 32 with a first fold 60 in a first plane perpendicular to the direction of the pivot axis Y-Y, a second fold 61 in a second plane perpendicular to the first plane, a curved portion 62, preferably forming a semi-circumference, with concavity opposite to the second fold 61 and facing the thrust direction X-X, and a first arm abutment portion 63 bent on the opposite side with respect to the curved portion 62. In an embodiment, the first arm 30 of first elastic return element forms a U-bent portion or curved portion 62, adapted to be arranged in a plane substantially orthogonal to the thrust direction X-X and substantially parallel to a direction coincident with or parallel to the direction of the pivot axis Y-Y, when the spring assembly is assembled to the lever device 100.

### LIST OF REFERENCE SIGNS

- 1: lever assembly
- 2: primary lever
- 3: secondary lever or hub
- 4: first elastic return element of primary lever
- 5: second elastic return element of secondary lever
- 6: elastic relative-load element
- 7: primary lever thrust portion
- 8: primary lever anti-rotation portion
- 9: secondary lever counter-abutment portion
- 10: shaft
- 11: primary lever body
- 12: secondary lever body
- 13: push rod
- 14: primary lever bushing
- 15: secondary lever bushing
- 16: primary lever recessed housing or seat
- 17: first primary lever connecting element
- 18: secondary lever connecting element
- 19: inner housing side wall
- 20: body or bracket connecting means
- 21: master cylinder body
- 22: piston or float
- 23: cavity or cylinder
- 24: fluid tank
- 25: second connecting element of primary lever
- 26a: first primary lever connecting element coupling portion
- 26b: second connecting element coupling portion of primary lever
- 27: secondary lever connecting element coupling portion
- 28: dust cuff
- 29: thrust transmission element or actuation pin
- 30: first arm of first elastic return element
- 31: second arm of first elastic return element
- 32: first elastic return element winding
- 33: first arm of elastic relative-load element
- 34: second arm of elastic relative-load element
- 35: elastic relative-load element winding
- 36: first inner wall portion
- 37: second abutment portion of master cylinder body
- 38: grippable portion of primary lever
- 39: second inner wall portion
- 40: combined braking connecting portion
- 41: first master cylinder body abutment portion
- 42: primary lever stop wall
- 43: secondary lever stop counter-wall
- 44: secondary lever anti-rotation portion
- 45: rotation pin
- 46: first connecting bracket
- 47: second connecting bracket
- 48: pin guide portion
- 49: bushing end
- 50: annular seat
- 51: annular primary lever wall
- 52: annular secondary lever wall
- 53: proximal portion of second arm of elastic relative-load element
- 54: distal portion of second arm of elastic relative-load element
- 55: cylinder walls
- 56: piston bottom
- 57: pressure chamber
- 58: supply channel
- 59: housing bottom wall
- 60: first fold
- 61: second fold
- 62: curved portion or U-bent portion
- 63: abutment end portion
- 64: shaped metal sheet
- 65: linear guide
- 66: sliding pin

- 100: lever device
- 101: first braking device or front braking device
- 102: second braking device or rear braking device
- 103: combined braking mechanism
- 104: combined action lever

- Y-Y: pivot axis
- X-X: thrust direction

## Claims

1. A lever assembly (1) for a lever device (100) configured to hydraulically actuate a first braking device or front braking device (101) of a handlebar vehicle,
said lever device (100) comprising a master cylinder body (21) comprising connecting means (20) for constraining the master cylinder body (21) to a handlebar of the handlebar vehicle, said master cylinder body (21) comprising cylinder walls (55) delimiting a cavity or cylinder (23),
- at least one float or piston (22), operatively associated with the master cylinder body (21), so as to be adapted to slide inside the cavity or cylinder (23) along a thrust direction (X-X), said float or piston (22) comprising a piston bottom (56) defining, with the cylinder walls (55) of the master cylinder body (21), at least one pressure chamber (57) configured to accommodate an actuating fluid of the first braking device or front braking device (101), wherein at least one of the cylinder walls (55) is interrupted to delimit at least one supply channel (58) configured to put the pressure chamber (57) in fluid communication with least one associated fluid tank (24),
wherein the piston bottom (56) is movable with respect to said cylinder walls (55), between:
- at least one end-of-stroke position, in which the volume of said pressure chamber (57) is maximum,
- and at least a first working position, in which said piston bottom fluidly isolates said pressure chamber (57) from said supply channel (58), pressurizing the actuating fluid in the pressure chamber (57),
wherein the lever device (100) comprises an elastic return element (5) arranged inside said cavity or cylinder and interposed between said piston bottom (56) and a connecting seat defined by the cylinder walls (55) so as to elastically bias the piston or float (22) to the end-of-stroke position,
wherein the lever assembly (1) comprises
a primary lever (2) rotatably associable with the master cylinder body (21) so as to rotate about at least one pivot axis (Y-Y), said primary lever (2) being either directly or indirectly connectable to said float or piston (22);
the primary lever (2) being rotatable about the at least one pivot axis (Y-Y) between:
a primary lever resting position,
and at least one primary lever actuation position, in which the primary lever (2) directly or indirectly biases said float or piston (22),
wherein the lever assembly (1) comprises an elastic return element (4) of primary lever configured to elastically bias the primary lever (2) to the primary lever resting position,
wherein the elastic return element (4) of primary lever is a torsional spring comprising at least a first elastic return element winding (32), a first arm (30) of first elastic return element, and a second arm (31) of first elastic return element extending from said a first elastic return element winding (32),
wherein the primary lever (2) comprises a primary lever body (11), wherein the primary lever body (11) defines a primary lever recessed housing or seat (16) adapted to accommodate at least partially the elastic return element (4) of primary lever, wherein the primary lever body (11) comprises at least a first primary lever connecting element (17),
wherein the first primary lever connecting element (17) comprises a first primary lever connecting element coupling portion (26a) configured to couple the second arm (31) of first elastic return element such that, when the second arm (31) of first elastic return element is coupled to the first primary lever connecting element (17), the elastic return element (4) of primary lever is preassembled to the primary lever (2) irrespective of the connection of the primary lever (2) to the master cylinder body (21).

2. A lever assembly (1) according to the preceding claim,
wherein the primary lever (2) comprises a primary lever bushing (14) extending from the primary lever body (11) into the housing (16), wherein the primary lever bushing (14) is configured to accommodate either directly or indirectly a rotation pin (45), wherein the rotation pin (45) is configured to connect the lever assembly (1) to a first connecting bracket (46) and a second connecting bracket (47) of the master cylinder body (21) spaced apart along a direction parallel to the pivot rotation axis (Y-Y) fixing the rotation pin (45) to appropriate perforated seats made in the connecting brackets (46, 47) coaxial to the pivot rotation axis (Y-Y),
and wherein the at least a first elastic return element winding (32) is fitted onto the outer surface of the primary lever bushing (14) and abuts against an annular primary lever wall (51) extending about the base of the primary lever bushing (14),
wherein when the at least a first elastic return element winding (32) is fitted onto the primary lever bushing (14), and the second arm (31) of first elastic return element is coupled to the first primary lever connecting element (17) and/or to a second primary lever connecting element (25), the elastic return element (4) of primary lever is preassembled to the primary lever (2) irrespective of the connection of the primary lever (2) to the master cylinder body (21) by means of the rotation pin (45).

3. A lever assembly (1) according to any one of the preceding claims,
wherein the primary lever body (11) comprises a second primary lever connecting element (25),
wherein the second primary lever connecting element (25) comprises a second primary lever connecting element coupling portion (26b) configured to couple the second arm (31) of first elastic return element such that, when the second arm (31) of first elastic return element is coupled to the first primary lever connecting element (17) and to the second primary lever connecting element (25), the elastic return element (4) of primary lever is preassembled to the primary lever (2) irrespective of the connection of the primary lever (2) to the master cylinder body (21).

4. A lever assembly (1) according to the preceding claim, wherein the primary lever body (11) comprises an inner housing side wall (19) delimiting the housing (16),
the inner housing side wall (19) comprises a first inner wall portion (36) and a second inner wall portion (39) delimiting the housing (16) from opposite sides,
the first inner wall portion (36) and the second inner wall portion (39) substantially facing each other,
wherein the first inner wall portion (36) comprises the first primary lever connecting element (17),
wherein the second inner wall portion (39) comprises the second primary lever connecting element (25),
wherein the second arm (31) of first elastic return element comprises, moving away from the first elastic return element winding (32), an elastic relative-load element (6), wherein the elastic relative-load element (6) comprises a first arm (33) of elastic relative-load element and a second arm (34) of elastic relative-load element, wherein the first arm (33) of elastic relative-load element and the second arm (34) of elastic relative-load element elastically oppose each other as mutually approach,
wherein the first arm (33) of elastic relative-load element is coupled to the first primary lever connecting element coupling portion (26a) and wherein
the second arm (34) of elastic relative-load element is coupled to the second primary lever connecting element coupling portion (26b), such that the elastic return element (4) of primary lever is preassembled to the primary lever (2) irrespective of the connection of the primary lever (2) to the master cylinder body (21).

5. A lever assembly (1) according to claims 3 and 4,
wherein when the at least a first elastic return element winding (32) is fitted onto the primary lever bushing (14), the first arm (33) of elastic relative-load element and the second arm (34) of elastic relative-load element are coupled to the first primary lever connecting element (17) and/or the second primary lever connecting element (25), the elastic return element (4) of primary lever is preassembled to the primary lever (2) irrespective of the connection of the primary lever (2) to the master cylinder body (21) by means of the rotation pin (45).

6. A lever assembly (1) according to any one of the preceding claims,
wherein each primary lever connecting element (17, 25) is a stud, which is in relief with respect to an inner housing side wall (19) and/or a housing bottom wall (59) delimiting the housing (16), wherein each stud is adapted to limit the movements of the elastic return element (4) of primary lever along directions parallel to the pivot axis (Y-Y),
wherein each primary lever connecting element coupling portion (26a, 26b) is an undercut portion adapted to limit the movements of the elastic relative-load element (6) along directions parallel to the pivot axis (Y-Y).

7. A lever assembly (1) according to claim 2, comprising a secondary lever or hub (3) rotatably associable with the master cylinder body (21) and the primary lever (2),
wherein the secondary lever or hub (3) comprises a secondary lever bushing (15),
wherein the primary lever bushing (14) and the secondary lever bushing (15) are coaxial to the pivot axis (Y-Y),
wherein the primary lever bushing (14) is configured to accommodate the secondary lever bushing (15) or vice versa so as to allow a rotation of the primary lever (2) with respect to the secondary lever (3) about the pivot axis (Y-Y) when the primary lever bushing (14) and the secondary lever bushing (15) are mutually coupled, wherein the primary lever bushing (14) or the secondary lever bushing (15) is configured to accommodate a rotation pin (45), wherein the rotation pin (45) is configured to connect the lever assembly (1) to a first connecting bracket (46) and a second connecting bracket (47) of the master cylinder body (21) spaced apart along a direction parallel to the pivot rotation axis (Y-Y) fixing the rotation pin (45) to appropriate perforated seats made in the connecting brackets (46, 47) and coaxial to the pivot rotation axis (Y-Y),
wherein the second arm (31) of first elastic return element comprises, moving away from the first elastic return element winding (32), an elastic relative-load element (6), wherein the elastic relative-load element (6) comprises a first arm (33) of elastic relative-load element and a second arm (34) of elastic relative-load element, wherein the first arm (33) of elastic relative-load element and the second arm (34) of elastic relative-load element elastically oppose each other as mutually approach,
wherein the secondary lever (3) comprises a secondary lever connecting element (18), wherein the secondary lever connecting element (18) comprises a secondary lever connecting element coupling portion (27) configured to couple a distal second-arm portion (54) of elastic relative-load element,
wherein the primary lever bushing (14) and the secondary lever bushing (15) are mutually coupled, and wherein
the first arm (33) of elastic relative-load element and the second arm (34) of elastic relative-load element are coupled to the first primary lever coupling portion (26a) and the secondary lever connecting element coupling portion (27), respectively, by biasing the primary lever (2) and the secondary lever (3) along directions transverse to the pivot axis (Y-Y) by preventing a separation between the primary lever (2) and the secondary lever (3) along directions parallel to the pivot axis (Y-Y).

8. A lever assembly (1) according to the preceding claim, wherein
the primary lever comprising a primary lever thrust portion (7),
the secondary lever (3) comprising a secondary lever counter-abutment portion (9),
the primary lever (2) being rotatable about the at least one pivot axis (Y-Y) between:
a primary lever resting position,
and at least one primary lever actuation position, wherein the primary lever thrust portion (7) is in direct or indirect contact with the secondary lever counter-abutment portion (9),
the secondary lever (3) being rotatable about the at least one pivot axis (Y-Y), or an axis parallel thereto, between
a secondary lever resting position,
and at least one secondary lever actuation position,
wherein the elastic relative-load element (6) is configured to apply an elastic spacing action which opposes an approach of the secondary lever counter-abutment portion (9) to the primary lever thrust portion (7) or vice versa,
such that, when the primary lever (2) and the secondary lever or hub (3) are in the respective resting positions, the elastic relative-load element (6) avoids direct or indirect contact by rubbing between the secondary lever counter-abutment portion (9) and the primary lever thrust portion (7), and
such that the primary lever (2) is rotatable about the at least one pivot axis (Y-Y) between the primary lever resting position and the at least one primary lever actuation position, avoiding a direct or indirect contact between the secondary lever counter-abutment portion (9) and the primary lever thrust portion (7).

9. A lever assembly (1) according to the preceding claim, wherein the primary lever (2) comprises a primary lever stop wall (42) and wherein the secondary lever (3) comprises a secondary lever stop counter-wall (43),
wherein when the primary lever (2) and the secondary lever (3) are disconnected from the master cylinder body (21), and when the primary lever bushing (14) and the secondary lever bushing (15) are mutually coupled, the elastic relative-load element (6) is interposed between the first primary lever connecting element (17) of the primary lever (2) and the secondary lever connecting element (18), by rotationally biasing the secondary lever counter-abutment portion (9) about the pivot axis (Y-Y) away from the primary lever thrust portion (7) and by rotationally biasing the primary lever stop wall (42) against the secondary lever counter-abutment wall (43) about the pivot axis (Y-Y) or vice versa, defining the resting position of the primary lever (3) and the secondary lever (2), and mutually connecting the primary lever (2) and the secondary lever or hub (3) when preassembled without being connected to the master cylinder body (21).

10. A lever device (100) for hydraulically actuating a first braking device or front braking device (101) of a handlebar vehicle, comprising
- a master cylinder body (21) comprising connecting means (20) for constraining the master cylinder body (21) to a handlebar of the handlebar vehicle, said master cylinder body (21) comprising cylinder walls (55) delimiting a cavity or cylinder (23),
- at least one float or piston (22), operatively associated with the master cylinder body (21), so as to be adapted to slide inside the cavity or cylinder (23) along a thrust direction (X-X), said float or piston (22) comprising a piston bottom (56) defining, with the cylinder walls (55) of the master cylinder body (21), at least one pressure chamber (57) configured to accommodate an actuating fluid of the first braking device or front braking device (101), wherein at least one of the cylinder walls (55) is interrupted to delimit at least one supply channel (58) configured to put the pressure chamber (57) in fluid communication with at least one associated fluid tank (24),
wherein the piston bottom (56) is movable with respect to said cylinder walls (55), between:
- at least one end-of-stroke position, in which the volume of said pressure chamber (57) is maximum,
- and at least a first working position, in which said piston bottom fluidly isolates said pressure chamber (57) from said supply channel (58), pressurizing the actuating fluid in the pressure chamber (57),
wherein the lever device (100) comprises an elastic return element (5) arranged inside said cavity or cylinder and interposed between said piston bottom (56) and a cylinder seat defined by the cylinder walls (55) so as to elastically bias the piston or float (22) constantly towards the end-of-stroke position,
and wherein the lever device (100) comprises a lever assembly (1) according to any one of the preceding claims, wherein the lever assembly (1) is rotatably associated with the master cylinder body (21) so as to rotate about a pivot axis (Y-Y), said lever assembly (1) being either directly or indirectly connected to said float or piston (22).
